# EUROPÄISCHE PATENTSCHRIFT

(11) **EP 1 741 578 B1**
(45) Veröffentlichungstag und Bekanntmachung des Hinweises auf die Patenterteilung: **19.05.2010**
(21) Anmeldenummer: 06013899.7
(22) Anmeldetag: 05.07.2006
(51) Int. Cl.: B60G 17/052

(54) **Steuervorrichtung für eine Luftfederungsanlage eines Kraftfahrzeuges**
Control device for a pneumatic suspension system of a vehicle
Dispositif de commande de système de suspension pneumatique d'un véhicule

(30) Priorität: 09.07.2005 DE 102005032219
(43) Veröffentlichungstag der Anmeldung: 10.01.2007
(73) Patentinhaber: Haldex Brake Products GmbH, 69123 Heidelberg (DE)
(72) Erfinder: Heer, Siegfried, 69168 Wiesloch (DE)
(74) Vertreter: Rehberg Hüppe + Partner

(56) Entgegenhaltungen:
- EP-A- 0 779 168
- EP-A- 1 647 425
- DE-A1- 10 245 815
- DE-A1- 10 333 610
- DE-A1- 19 530 260

## Beschreibung

Die Erfindung betrifft eine Steuervorrichtung für eine Luftfederungsanlage eines Kraftfahrzeuges gemäß den Merkmalen des Oberbegriffs des Anspruchs 1.

### STAND DER TECHNIK

Aus der DE 102 45 815 A1 ist eine Steuervorrichtung für eine Luftfederungsanlage eines Kraftfahrzeuges bekannt. Die Steuervorrichtung ist aus mehreren Modulen aufgebaut, die jeweils einer Achse zugeordnet sind. In einem ersten, der Vorderachse zugeordneten Modul befindet sich eine elektrische Steuereinheit, eine Ventileinrichtung und ein Drucksensor. Die Ventileinrichtung ist als pneumatisches Querdrosselventil ausgebildet und besitzt eine Verbindungsstellung und eine Drosselstellung. In der Drosselstellung ist die die Druckluft heranführende Leitung abgesperrt. Die ausgangsseitig mit den Luftfederbälgen der beiden Fahrzeugseiten der Vorderachse verbundenen Querleitungen sind in der Drosselstellung über eine in dem Schaltventil angeordnete Querdrossel verbunden. Diese Querdrossel erfüllt somit Querdrosselfunktion. Es ist ein weiterer Modul für die Hinterachse vorgesehen, bei dem ebenfalls pneumatische Schaltventile mit elektrischen Vorsteuerventilen baulich vereinigt sind. Auf diese Weise sind ein Versorgungsventil und zwei Sperrventile gebildet, wobei die Sperrventile über das Versorgungsventil mit Druckluft versorgt oder entlüftet werden. Schließlich gibt es einen dritten Modul für eine Liftachse. Auch hier sind wieder elektrische Vorsteuerventile mit pneumatischen Schaltventilen baulich vereinigt, wobei wiederum ein Versorgungsventil und zwei Sperrventile gebildet werden. Durch eine derartige Modulbauweise soll eine Reduzierung des Installationsaufwands der einzelnen Systemkomponenten einer Druckluftsteuervorrichtung erreicht werden. Auch der Aufwand für Verrohrung und Verkabelung soll durch die Integration einiger Systemkomponenten in einem Modul reduziert werden. Darüber hinaus sollen die Kosten bei der Fahrzeugherstellung insoweit minimiert werden. Jedoch ist die Anzahl der erforderlichen elektrischen Vorsteuerventile hoch. Jedes pneumatische Schaltventil benötigt ein solches elektrisches Vorsteuerventil, so dass die Anzahl der elektrischen Vorsteuerventile mit der Anzahl der Versorgungs- und Sperrventile übereinstimmt.

Aus der DE 103 33 610 A1 ist eine Steuervorrichtung für eine Luftfederungsanlage eines Kraftfahrzeugs gemäß den Merkmalen des Oberbegriffs des Anspruchs 1 bekannt. Es sind mehrere luftgefederte Achsen beschrieben, denen eine gemeinsame elektrische Steuereinheit zugeordnet ist. Die Vorderachse weist zwei den beiden Fahrzeugseiten zugeordnete Luftfederbälge auf, die durch ein in einer Querleitung zwischen den Luftfederbälgen angeordnetes Querdrosselventil verbunden sind. Das Querdrosselventil ist pneumatisch ansteuerbar ausgebildet und wird über ein elektrisch ansteuerbares Vorsteuerventil angesteuert. Es ist ein pneumatisch ansteuerbares Versorgungsventil vorgesehen, das über ein weiteres elektrisch ansteuerbares Vorsteuerventil angesteuert wird. Das Versorgungsventil ist mehreren Achsen zugeordnet, auch der Achse, der das Querdrosselventil zugeordnet ist. Das Querdrosselventil wird also hier über das Versorgungsventil mit Druckluft versorgt, die auf diesem Wege auch in die Luftfederbälge der Vorderachse gelangt bzw. in die Atmosphäre entlüftet wird. In einem der Hinterachse zugeordneten Luftfederkreis sind der rechten und der linken Fahrzeugseite zugeordnete pneumatisch schaltbare Sperrventile, jedoch kein Querdrosselventil, vorgesehen, die ebenfalls über elektrisch ansteuerbare Vorsteuerventile vorgesteuert werden. Auch diese Sperrventile werden über das Versorgungsventil entlüftet. Die Anzahl der elektrischen Vorsteuerventile stimmt auch hier mit der Anzahl der Versorgungs- und Sperrventile überein. Die bekannte Steuervorrichtung weist eine große Anzahl Vorsteuerventile auf. Im Bereich der Druckluftaufbereitung sind auch elektrisch ansteuerbare Vorsteuerventile vorgesehen, die mehrere pneumatisch schaltbare Ventile gemeinsam schalten.

Aus der DE 195 30 260 A1 oder auch der EP 0 779 168 A2 sind Steuervorrichtungen für Luftfederungsantagen von Kraftfahrzeugen bekannt, bei denen elektrisch ansteuerbare Vorsteuerventile mit pneumatischen Schaltventilen baulich vereinigt sind. Auf diese Weise werden Versorgungsventile, Sperrventile und Querdrosselventile geschaffen und eingesetzt. Je nach der Zuordnung dieser Ventile zu den einzelnen Achsen ändert sich zwar die Anzahl der pro Achse eingesetzten Ventile. Jedoch verfügt jedes pneumatische Schaltventil über sein eigenes elektrisch ansteuerbares Vorsteuerventil, sodass sich die Problematik der Verringerung des baulichen Aufwandes hier nicht stellt.

Aus der nachveröffentlichten EP 1 647 425 A2 ist eine Steuervorrichtung für eine Luftfederungsanlage eines Kraftfahrzeuges bekannt, bei der pneumatische Schaltventile durch separate elektrisch ansteuerbare Vorsteuerventile gesteuert werden. Die Anzahl der Vorsteuerventile ist gleich der Anzahl der pneumatischen Schaltventile, kann aber auch kleiner sein. Bei einer Verringerung des baulichen Aufwandes auf diese Weise werden jedoch immer nur zwei pneumatische Schaltventile gleicher Ausbildung und Bedeutung durch ein gemeinsames Vorsteuerventil gesteuert, z. B. die beiden Sperrventile einer Achse oder die beiden Versorgungsventile zweier Achsen.

### AUFGABE DER ERFINDUNG

Der Erfindung liegt die Aufgabe zugrunde, eine Steuervorrichtung für eine Luftfederungsanlage für ein Kraftfahrzeug der eingangs beschriebenen Art so weiterzubilden, dass der bauliche Aufwand verringert wird.

### LÖSUNG

Die Aufgabe der Erfindung wird erfindungsgemäß mit den Merkmalen des unabhängigen Patentanspruchs 1 gelöst.

### BESCHREIBUNG DER ERFINDUNG

Die Erfindung sieht vor, zunächst einmal ein elektrisch ansteuerbares Querdrosselventil als gesonderte pneumatische Ventileinheit in der Steuerungsanlage anzuordnen. Das Querdrosselventil weist einerseits eine Sperrstellung und andererseits eine Durchgangsstellung auf. Es ist in eine Querleitung zwischen den Luftfederbälgen zweier Fahrzeugseiten einer Achse eingeschaltet. Die beiden Luftfederbälge der beiden Fahrzeugseiten werden in der Durchgangsstellung miteinander verbunden, so dass ein Luftaustausch möglich ist. Dabei wird eine Drossel zur Einwirkung gebracht, die entweder neben dem Querdrosselventil oder in dem Querdrosselventil angeordnet ist. In der Sperrstellung werden dagegen die beiden Luftfederbälge der beiden Fahrzeugseiten gegeneinander abgesperrt. Das elektrisch schaltbare Querdrosselventil besitzt in seinem pneumatischen Teil eine Feder, die so angeordnet und ausgestaltet ist, dass sie das Querdrosselventil stromlos in der Durchgangsstellung hält oder in die Durchgangsstellung überführt. Die Anordnung und Ausbildung des Querdrosselventils kann aber auch so getroffen sein, dass stromlos die Sperrstellung eingenommen wird.

Die pneumatischen Schaltventile der Steuervorrichtung lassen sich in Versorgungsventile und in Sperrventile unterteilen. Die Versorgungsventile haben die Aufgabe, die Sperrventile mit Druckluft zu versorgen. Dies geschieht in einer Durchgangsstellung. Darüber hinaus weisen die Versorgungsventile eine Entlüftungsstellung auf, in der sie die zu den Sperrventilen führenden Leitungen in die Atmosphäre entlüften, so dass je nach Stellung der Sperrventile eine Entlüftung der Luftfederbälge stattfindet oder nicht. Den Versorgungsventilen für die Be- und Entlüftung, den Sperrventilen und dem schaltbaren Querdrosselventil sind jeweils elektrische Vorsteuerventile zugeordnet, mit deren Hilfe die pneumatischen Schaltventile geschaltet werden. Dabei ist die Zuordnung jedoch so getroffen, dass mindestens zwei dieser Schaltventile, nämlich das Querdrosselventil und ein Versorgungsventil, die einer Achse zugeordnet sind, zusammen einem einzigen elektrischen Vorsteuerventil zugeordnet sind. Dieses elektrische Vorsteuerventil schaltet dann gemeinsam das Versorgungsventil und das Querdrosselventil. Auf diese Weise wird erreicht, dass die Anzahl der elektrischen Vorsteuerventile mindestens um 1 kleiner ist als die Anzahl der pneumatischen Schaltventile. Dies bedeutet eine Reduzierung des baulichen Aufwands, ohne dass erforderliche Funktionen aufgegeben werden.

Der Achse, deren Luftfederbälge durch das Querdrosselventil verbunden sind, können die Sperrventile zugeordnet sein, die ebenfalls von einem weiteren elektrisch steuerbaren Vorsteuerventil gemeinsam vorgesteuert werden. Einem elektrischen Vorsteuerventil können also zwei Sperrventile eines Kreises zugeordnet sein, so dass die beiden Sperrventile des Kreises gemeinsam über das elektrische Vorsteuerventil schaltbar sind. Das Vorsteuerventil, welches die Sperrventile schaltet, ist ein zweites Vorsteuerventil und kann immer zusätzlich zu dem ersten Vorsteuerventil eingesetzt werden, welches bevorzugt das Versorgungsventil und das Querdrosselventil des ersten Kreises steuert.

Das Querdrosselventil und das Versorgungsventil können Bestandteile eines Kreises sind. In der Regel wird dies der Fall sein. Es ist aber auch möglich, dass das Querdrosselventil und das Versorgungsventil Bestandteile mehrerer Kreise sind.

Das Querdrosselventil kann eine in die Durchgangsstellung integrierte Drossel aufweisen. Die Drossel kann aber auch in einem Teil der Querleitung zwischen den Luftfederbälgen verschiedener Fahrzeugseiten vorgesehen sein. In mehreren Querleitungsteilen können auch mehrere Teildrosseln vorgesehen sein.

Es kann aber auch ein gemeinsames Versorgungsventil für mehrere Kreise vorgesehen sein, das von einem elektrischen Vorsteuerventil schaltbar ist. Von dem gemeinsamen Versorgungsventil führen entsprechende Leitungen zu den Sperrventilen der betreffenden Kreise.

Ein elektrisches Vorsteuerventil kann mehreren Versorgungsventilen mehrerer Kreise zugeordnet sein, so dass die Versorgungsventile gemeinsam über das elektrische Vorsteuerventil schaltbar sind. In der Regel ist eine mehrfache Anordnung von Versorgungsventilen für mehrere Kreise jedoch nicht erforderlich.

Das Querdrosselventil kann eine Feder aufweisen, die die Durchgangsstellung beaufschlagt, also das Querdrosselventil in der nicht pneumatisch angesteuerten Stellung in die Durchgangsstellung überführt oder in der Durchgangsstellung hält, falls es vorher bereits in der Durchgangsstellung war. Es ist aber auch möglich, dass das Querdrosselventil eine Feder aufweist, die die Sperrstellung beaufschlagt.

Einem elektrischen Vorsteuerventil können in einer besonders vorteilhaften Ausführungsform mehrere Versorgungsventile mehrerer Kreise und ein Querdrosselventil zugeordnet sein, so dass die Versorgungsventile und das Querdrosselventil gemeinsam über das elektrische Vorsteuerventil schaltbar sind.

Vorteilhafte Weiterbildungen der Erfindung ergeben sich also aus den abhängigen Patentansprüchen und der gesamten Beschreibung. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche abweichend von den gewählten Rückbeziehungen ist ebenfalls möglich und wird hiermit angeregt. Dies betrifft auch solche Merkmale, die in separaten Zeichnungsfiguren dargestellt sind oder bei deren Beschreibung genannt werden. Diese Merkmale können auch mit Merkmalen unterschiedlicher Patentansprüche kombiniert werden.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste Ausführungsform der Steuervorrichtung für eine einkreisige Luftfederanlage.
- **Fig. 2**: zeigt eine Ausführungsform der Steuervorrichtung für eine dreikreisige Luftfederanlage.
- **Fig. 3**: zeigt eine weitere Ausführungsform der Steuervorrichtung für eine dreikreisige Luftfederanlage.

- **Fig. 4**: zeigt eine weitere Ausführungsform der Steuervorrichtung für eine dreikreisige Luftfederanlage.
- **Fig. 5**: zeigt eine weitere Ausführungsform der Steuervorrichtung für eine dreikreisige Luftfederanlage.

### FIGURENBESCHREIBUNG

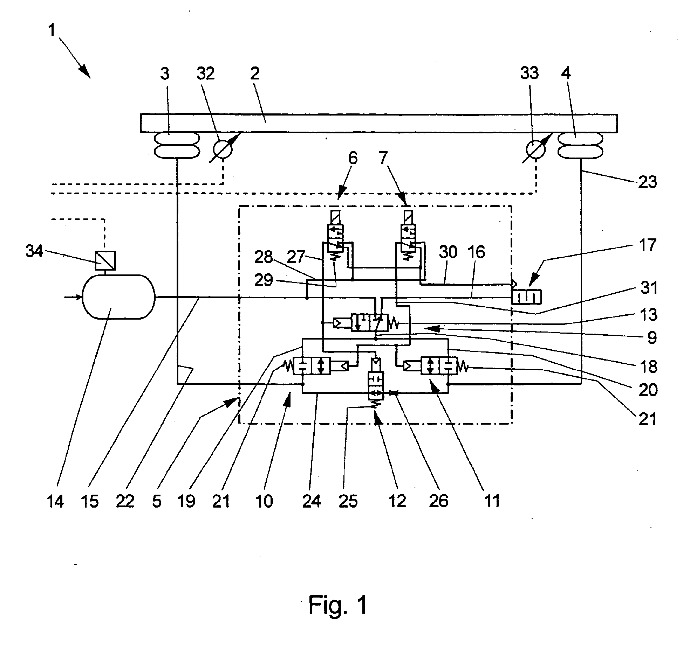

In **Fig. 1** ist eine erste Ausführungsform der Steuervorrichtung 1 dargestellt. Der Fahrzeugaufbau 2 ist schematisch dargestellt und wird von zwei Luftfederbälgen 3, 4 getragen. Der Luftfederbalg 3 möge auf der linken Fahrzeugseite, der Luftfederbalg 4 auf der rechten Fahrzeugseite vorgesehen sein. Es ist eine Antriebsachse oder eine Vorderachse des Kraftfahrzeugs dargestellt.

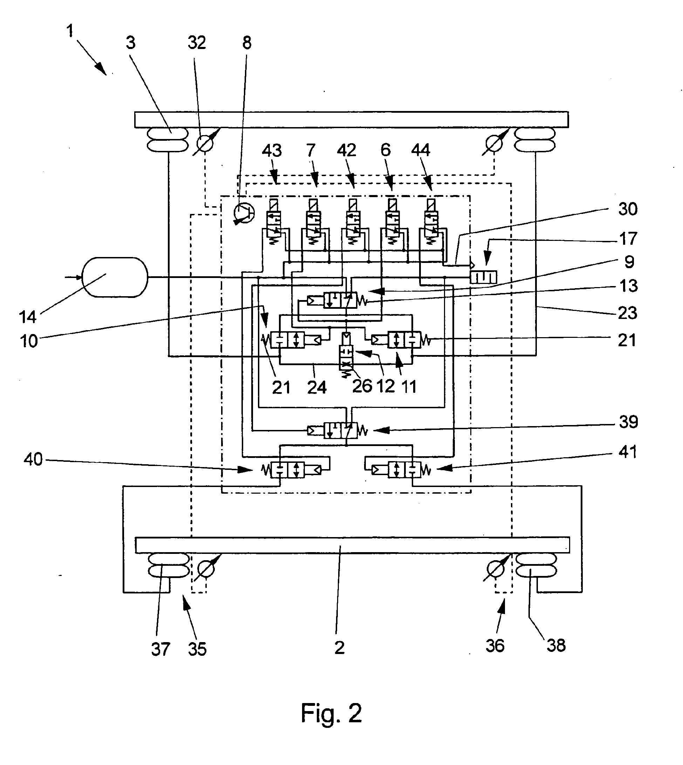

Wesentlicher Bestandteil der Steuervorrichtung ist ein Modul 5 oder ein gemeinsames Gehäuse, in dem einerseits zwei elektrische Vorsteuerventile 6, 7 vorgesehen sind, die über eine hier nicht dargestellte elektronische Steuereinheit 8 (Fig. 2), angesteuert werden. Die elektronische Steuereinheit 8 kann gemäß Fig. 1 als separate Einheit (nicht dargestellt) irgendwo angeordnet sein. Gemäß Fig. 2 ist die elektronische Steuereinheit 8 in den Modul 5 oder das gemeinsame Gehäuse integriert.

In dem Modul 5 oder dem gemeinsamen Gehäuse ist weiterhin ein Versorgungsventil 9 für die Be- und Entlüftung der Luftfederbälge 3, 4 vorgesehen. Weiterhin ist ein Sperrventil 10 für die linke Fahrzeugseite und ein Sperrventil 11 für die rechte Fahrzeugseite vorgesehen. Schließlich nimmt der Modul 5 noch ein Querdrosselventil 12 auf. Das Versorgungsventil 9 weist eine Feder 13 auf, die in nicht angesteuertem Zustand das Versorgungsventil 9 in die Entlüftungsstellung überführt oder hält.

Von einem Vorratsbehälter 14 für Druckluft führt eine Leitung 15 zu dem Versorgungsventil 9. Von dem Versorgungsventil 9 führt eine Leitung 16 zu einer Entlüftung 17.

Das Versorgungsventil 9 weist einen Ausgang 18 auf, von dem eine Leitung 19 zu dem Sperrventil 10 und eine Leitung 20 zu dem Sperrventil 11 führt. Die beiden Sperrventile 10 und 11 besitzen jeweils eine Durchgangsstellung und eine Sperrstellung. Sie sind mit Federn 21 ausgestattet, die die Sperrstellung belasten. Von dem Sperrventil 10 führt eine Leitung 22 zu dem Luftfederbalg 3. Von dem Sperrventil 11 führt eine Leitung 23 zu dem Luftfederbalg 4. Die beiden Leitungen 22 und 23 sind über eine Querleitung 24 miteinander verbunden, in der das Querdrosselventil 12 angeordnet ist. Auch das Querdrosselventil 12 besitzt eine Durchgangsstellung und eine Sperrstellung. Es ist mit einer Feder 25 ausgestattet, die die Durchgangsstellung belastet. In der Querleitung 24 ist eine Drossel 26 angeordnet.

Von dem elektrischen Vorsteuerventil 6 führt eine pneumatische Steuerleitung 27 sowohl zu dem Versorgungsventil 9 wie auch zu dem Querdrosselventil 12. Damit wird das Versorgungsventil 9 und das Querdrosselventil 12 über das elektrische Vorsteuerventil 6 gemeinsam geschaltet. Das elektrische Vorsteuerventil 6 wird über eine Leitung 28 mit Druckluft versorgt, ebenso das elektrische Vorsteuerventil 7. Beide Vorsteuerventile 6 und 7 weisen eine Verbindungsstellung und eine Entlüftungsstellung auf. Sie sind von Federn 29 in die Entlüftungsstellung beaufschlagt. Eine Leitung 30 führt zur Entlüftung 17.

Von dem elektrischen Vorsteuerventil 7 führt eine pneumatische Steuerleitung 31 sowohl zu dem Sperrventil 10 wie auch zu dem Sperrventil 11, so dass auch den beiden Sperrventilen 10 und 11 ein gemeinsames Vorsteuerventil 7 zugeordnet ist. Es ist natürlich auch möglich, jedem der beiden Sperrventile 10 und 11 je ein eigenes elektrisches Vorsteuerventil zuzuordnen. Auf jeden Fall ist die Anzahl der elektrischen Vorsteuerventile geringer als die Anzahl der pneumatischen Schaltventile, also der Versorgungsventile, der Sperrventile und der Querdrosselventile.

Es sind weiterhin Wegsensoren 32 und 33 vorgesehen, weiterhin ein Drucksensor 34. Entsprechende elektrische Leitungen dienen zum Transport der betreffenden Signale zu der elektrischen Steuereinheit 8.

### Die Wirkungsweise der Steuervorrichtung 1 gemäß Fig. 1 ist folgende:

Die Ventile nehmen die in Fig. 1 dargestellte Ausgangslage ein. Damit steht Druckluft aus dem Vorratsbehälter 14 über die Leitung 15 an dem Versorgungsventil 9 an. Die beiden Sperrventile 10 und 11 sind über die Leitung 16 entlüftet. Da sie sich jedoch in ihrer Sperrstellung befinden, herrscht in den Luftfederbälgen 3 und 4 ein entsprechender Balgdruck vor.

Findet eine Beladung des Kraftfahrzeugs statt, so muss der Druck in den Luftfederbälgen 3 und 4 entsprechend erhöht werden, damit die vorgesehene Fahrgestellhöhe wieder eingenommen und von den Wegsensoren 32 und 33 festgestellt wird. Zu diesem Zweck schaltet die elektrische Steuereinheit 8 das elektrische Vorsteuerventil 6 um, so dass dieses Steuerluft aus dem Vorratsbehälter 14 über die Leitung 27 sowohl zu dem Versorgungsventil 9 wie auch zu dem Querdrosselventil 12 schickt und diese beiden Ventile umschaltet. Damit steht Vorratsluft an den Sperrventilen 10 und 11 an. Über das elektrische Vorsteuerventil 7 werden die Sperrventile 10 und 11 umgeschaltet, so dass diese in ihrer Durchgangsstellungen gelangen und damit Druckluft in die Luftfederbälge 3 und 4 der linken und rechten Fahrzeugseite geleitet wird. Ist die vorgesehene Fahrgestellhöhe erreicht, wird dies von den Wegsensoren 32 und 33 angezeigt und die elektrische Steuereinheit 8 steuert die elektrischen Vorsteuerventile 6 und 7 wiederum in ihre in Fig. 1 dargestellte Ausgangslage zurück.

Beim Entladen des Fahrzeugs muss Druckluft aus den Luftfederbälgen 3 und 4 entfernt werden. Dies geschieht in entsprechender Weise.

Im dynamischen Fahrzustand des Kraftfahrzeuges befinden sich die Sperrventile 10 und 11 jeweils in ihrer Sperrstellung. Über das elektrische Vorsteuerventil 6 wird das Versorgungsventil 9 und das Querdrosselventil 12 umgesteuert. Die Umsteuerung des Versorgungsventils 9 hat an den Sperrventilen 10 und 11 keine Auswirkung, während das Querdrosselventil 12 seine Sperrstellung einnimmt. Die umgeschaltete Stellung des Querdrosselventils 12 wird so lange beibehalten, wie dies in Abhängigkeit von Fahrzeugparametern während der Fahrt gewünscht wird. Es gibt also durchaus auch Fahrzustände, in denen das Querdrosselventil 12 nicht angesteuert wird und insoweit seine Durchgangsstellung mit der Drosselfunktion erbringt. In Ausnahmefällen, wenn die Ladung des Fahrzeugs während der Fahrt an Gewicht abnimmt, kann über die Steuereinheit 8 auch eine Umsteuerung des elektrischen Vorsteuerventils 7 und damit der Sperrventile 10 und 11 erfolgen, so dass durch eine kurzzeitige Entlüftung der Luftfederbälge 3 und 4 dem neuen Beladungszustand Rechnung getragen wird.

Die Steuereinheit gemäß **Fig. 2** ist zunächst grundsätzlich ähnlich aufgebaut wie die der Fig. 1. Die Steuereinheit 8 ist in dem Modul 5 integriert angeordnet. In dem Modul 5 sind auch hier die beiden elektrischen Vorsteuerventile 6 und 7, das Versorgungsventil 9, die beiden Sperrventile 10 und 11 und das Querdrosselventil 12 angeordnet, wobei die Drossel 26 in dem Querdrosselventil 12, genauer gesagt in dessen Durchgangsstellung angeordnet ist. Auch hier ist im oberen Teil der Darstellung die Antriebsachse oder Vorderachse eines Kraftfahrzeugs dargestellt, während im unteren Teil zwei weitere Kreise 35 und 36 des Fahrzeugaufbaus 2 vorgesehen und ausgebildet sind. Der Kreis 35 ist der linken Fahrzeugseite, der Kreis 36 der rechten Fahrzeugseite zugeordnet. Zu diesem Zweck sind Luftfederbälge 37 und 38 vorgesehen. Den beiden Kreisen 35 und 36 ist ein weiteres Versorgungsventil 39 gemeinsam zugeordnet, während der Kreis 35 über ein weiteres Sperrventil 40 und der Kreis 36 über ein weiteres Sperrventil 41 verfügt. Dem weiteren Versorgungsventil 39 ist ein Vorsteuerventil 42 zugeordnet. Zu dem Sperrventil 40 gehört ein elektrisches Vorsteuerventil 43, zu dem Sperrventil 41 ein elektrisches Vorsteuerventil 44. Die Leitungsverbindung ist aus sich heraus verständlich. Es versteht sich, dass die elektrische Steuereinheit 8 hier die elektrischen Vorsteuerventile 6, 7, 42, 43, 44 entsprechend schaltet. Wie erkennbar, verfügt die Steuervorrichtung 1 über insgesamt sieben pneumatische Schaltventile, nämlich die Versorgungsventile 9 und 39, die Sperrventile 10, 11, 40, 41 und das Querdrosselventil 12. Die Anzahl der elektrischen Vorsteuerventile 6, 7, 42, 43, 44 beträgt fünf und ist damit auch hier kleiner als die Anzahl der pneumatischen Schaltventile.

Funktion und Wirkungsweise sind überschaubar.

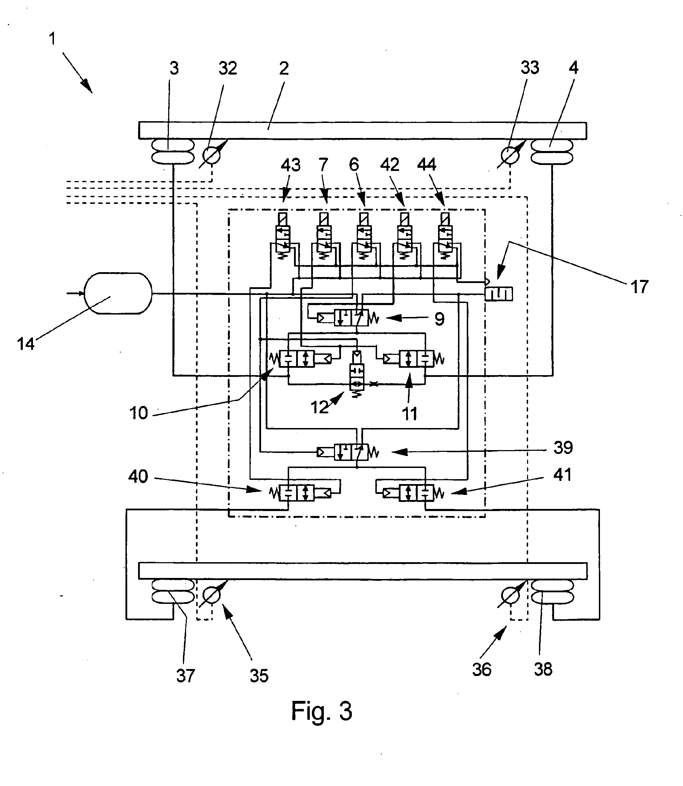

Die Ausführungsform gemäß **Fig. 3** ist grundsätzlich ähnlich aufgebaut wie die Ausführungsform der Fig. 2. Jedoch ist hier das elektrische Vorsteuerventil 6 dem Querdrosselventil 12 des ersten Kreises und dem Versorgungsventil 39 des zweiten und dritten Kreises 35, 36 zugeordnet, während zur pneumatischen Ansteuerung des Versorgungsventils 9 das elektrische Vorsteuerventil 42 herangezogen bzw. geschaltet ist.

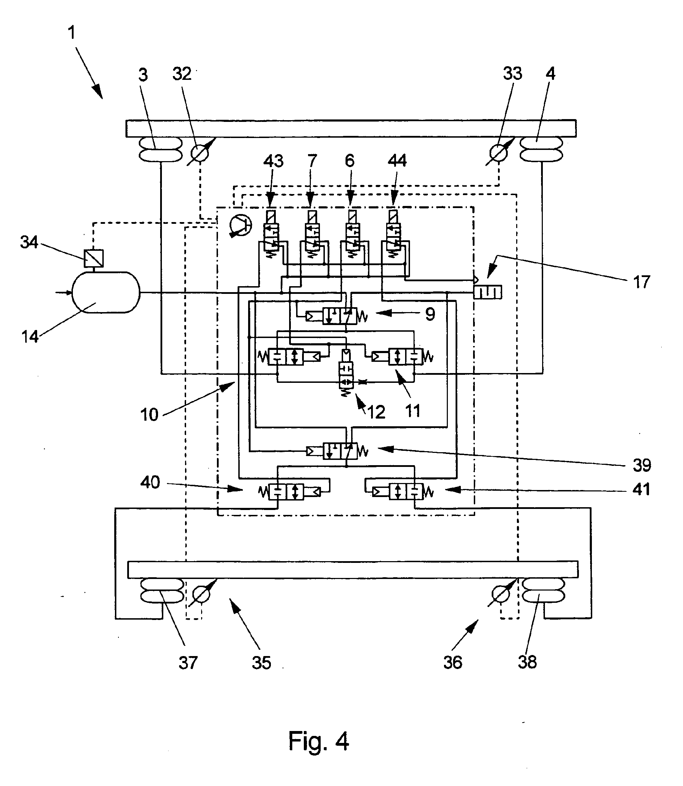

Die Ausführungsform der **Fig. 4** entspricht in vielen Einzelheiten den Ausführungsformen der Fig. 2 und 3. Jedoch ist hier die Anzahl der elektrischen Vorsteuerventile noch weiter verringert. Es sind hier insgesamt nur vier elektrische Vorsteuerventile 6, 7, 43, 44 vorgesehen. Dies ist dadurch möglich, dass das elektrische Vorsteuerventil 6 sowohl das Versorgungsventil 9 des ersten Kreises, wie auch das Versorgungsventil 39 der beiden weiteren Kreise 35 und 36 und schließlich auch das Querdrosselventil 12 steuert. Bei diesem Ausführungsbeispiel beträgt die Anzahl der pneumatischen Schaltventile sieben und die Anzahl der elektrischen Vorsteuerventile vier. Der Aufwand ist also hier besonders gering.

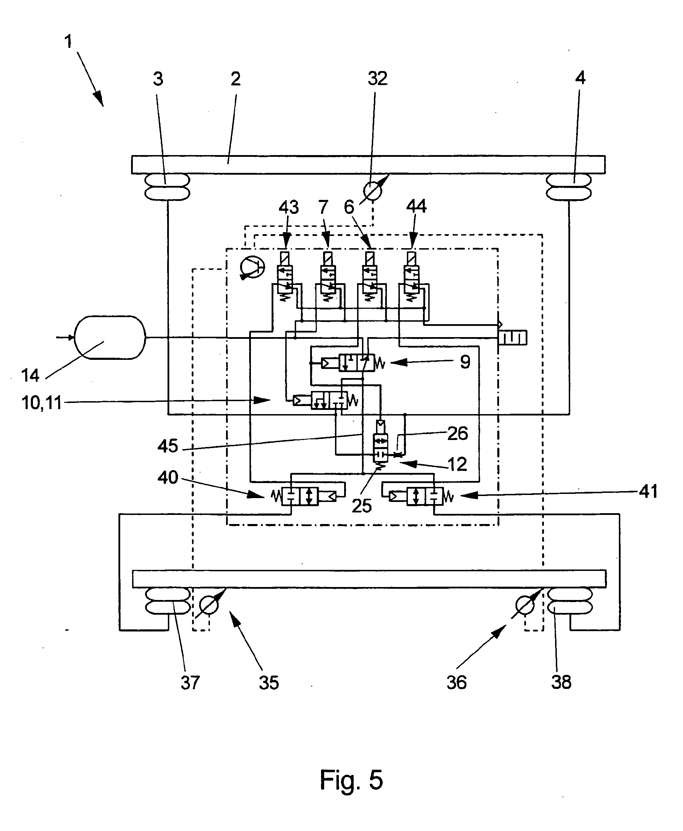

Bei der Ausführungsform gemäß **Fig. 5** sind die beiden Sperrventile 10 und 11 zu einem gemeinsamen Sperrventil 10, 11 zusammengefasst. Auch fehlt das Versorgungsventil 39. Stattdessen ist das Versorgungsventil 9 auch zur Versorgung der Sperrventile 40 und 41 der Kreise 35 und 36 ausgebildet. Zu diesem Zweck ist eine entsprechende Leitung 45 vorgesehen. Diese Steuereinrichtung 1 weist die weitere Besonderheit auf, dass die Feder 25 des Querdrosselventils 12 die Sperrstellung belastet. Im Bereich der Antriebsachse oder der Vorderachse ist nur ein Wegsensor 32 vorgesehen.

Funktion und Wirkungsweise sind aus der vorangehenden Beschreibung für einen Fachmann erkennbar.

### BEZUGSZEICHENLISTE

- 1: Steuervorrichtung
- 2: Fahrzeugaufbau
- 3: Luftfederbalg
- 4: Luftfederbalg
- 5: Modul
- 6: elektrisches Vorsteuerventil
- 7: elektrisches Vorsteuerventil
- 8: elektronische Steuereinheit
- 9: Versorgungsventil
- 10: Sperrventil

- 11: Sperrventil
- 12: Querdrosselventil
- 13: Feder
- 14: Vorratsbehälter
- 15: Leitung
- 16: Leitung
- 17: Entlüftung
- 18: Ausgang
- 19: Leitung
- 20: Leitung

- 21: Feder
- 22: Leitung
- 23: Leitung
- 24: Querleitung
- 25: Feder
- 26: Drossel
- 27: pneumatische Steuerleitung
- 28: Leitung
- 29: Feder
- 30: Leitung

- 31: pneumatische Steuerleitung
- 32: Wegsensor
- 33: Wegsensor
- 34: Drucksensor
- 35: Kreis
- 36: Kreis
- 37: Luftfederbalg
- 38: Luftfederbalg
- 39: Versorgungsventil
- 40: Sperrventil

- 41: Sperrventil
- 42: Vorsteuerventil
- 43: Vorsteuerventil
- 44: Vorsteuerventil
- 45: Leitung

## Patentansprüche

1. Steuervorrichtung für eine Luftfederungsanlage eines Kraftfahrzeuges, mit zwei Fahrzeugseiten einer Achse zugeordneten Luftfederbälgen (3, 4), die durch ein in einer Querleitung (24) zwischen den Luftfederbälgen (3, 4) angeordnetes elektrisch vorsteuerbares pneumatisches Querdrosselventil (12) verbunden sind, mit einer insbesondere integrierten elektrischen Steuereinheit (8), mit mehreren von der Steuereinheit (8) angesteuerten und Achsen zugeordneten elektrisch steuerbaren Vorsteuerventilen (6, 7), von denen eines ein pneumatisches Versorgungsventil vorsteuert, **dadurch gekennzeichnet, dass** das elektrisch vorsteuerbare pneumatische Querdrosselventil (12) die Luftfederbälge (3, 4) in einer Sperrstellung voneinander trennt und in einer Durchgangsstellung miteinander verbindet, und dass das Querdrosselventil (12) und das einer Achse zugeordnete Versorgungsventil (9 oder 39) oder die mehreren Achsen zugeordneten Versorgungsventile (9, 39) gemeinsam über das elektrische Vorsteuerventil (6) schaltbar sind.

2. Steuervorrichtung nach Anspruch 1, **dadurch gekennzeichnet, dass** der Achse, deren Luftfederbälge (3, 4) durch das Querdrosselventil (12) verbunden sind, Sperrventile (9, 10) zugeordnet sind, die von einem elektrisch steuerbaren Vorsteuerventil (7) gemeinsam vorgesteuert werden.

3. Steuervorrichtung nach Anspruch 1 oder 2, **dadurch gekennzeichnet, dass** das Querdrosselventil (12) und das Versorgungsventil (9) Bestandteile eines Kreises sind.

4. Steuervorrichtung nach Anspruch 1 oder 2, **dadurch gekennzeichnet, dass** das Querdrosselventil (12) und das Versorgungsventil (9) Bestandteile mehrerer Kreise sind.

5. Steuervorrichtung nach einem oder mehreren der Ansprüche 1 bis 4, **dadurch gekennzeichnet, dass** das Querdrosselventil (12) eine in die Durchgangsstellung integrierte Drossel (26) aufweist.

6. Steuervorrichtung nach mindestens einem der Ansprüche 1 bis 5, **dadurch gekennzeichnet, dass** ein gemeinsames Versorgungsventil (9) für mehrere Kreise vorgesehen ist, das von einem elektrischen Vorsteuerventil (6) schaltbar ist.

7. Steuervorrichtung nach mindestens einem der Ansprüche 1 bis 6, **dadurch gekennzeichnet, dass** ein elektrisches Vorsteuerventil (6) mehreren, Versorgungsventilen (9, 39) mehrerer Kreise zugeordnet ist, so dass die Versorgungsventile (9, 39) gemeinsam über das elektrische Vorsteuerventil (6) schaltbar sind.

8. Steuervorrichtung nach mindestens einem der Ansprüche 1 bis 7, **dadurch gekennzeichnet, dass** das Querdrosselventil (12) eine Feder (25) aufweist, die die Durchgangsstellung beaufschlagt.

9. Steuervorrichtung nach mindestens einem der Ansprüche 1 bis 7, **dadurch gekennzeichnet, dass** das Querdrosselventil (12) eine Feder (25) aufweist, die die Sperrstellung beaufschlagt.

10. Steuervorrichtung nach mindestens einem der Ansprüche 1 bis 9, **dadurch gekennzeichnet, dass** ein elektrisches Vorsteuerventil (6) mehreren Versorgungsventilen (9, 39) mehrerer Kreise und einem Querdrosselventil (12) zugeordnet ist, so dass die Versorgungsventile (9, 39) und das Querdrosselventil (12) gemeinsam über das elektrische Vorsteuerventil (6) schaltbar sind.

## Claims

1. Control device for an air suspension system of a vehicle having air suspension bellows (3, 4) associated with two sides of an axle, said air suspension bellows (3, 4) being connected by an electrically pilot operated pneumatic throttle valve (12) being positioned or integrated in a connecting conduit (24) between the air suspension bellows (3, 4), and having an electric control unit (8), in particular an integrated electric control unit (8), with a plurality of electrically controlled pilot valves (6, 7) being electrically controlled by the control unit (8) and associated with axles, one of said pilot valves (6, 7) pilot operating a pneumatic supply valve, **characterised by** the electronically pilot operated pneumatic throttle valve (12) separating the air suspension bellows (3, 4) in a blocked state and connecting the air suspension bellows (3, 4) in an open state, and the throttle valve (12) and the supply valve (9 or 39) associated with an axle or supply valves (9, 39) associated with axles are both or together switchable by the electrical pilot valve (6).

2. Control device according to claim 1, **characterised by** blocking valves (9, 10) being associated with the axle having air suspension bellows (3, 4) being connected by the throttle valve (12), wherein the blocking valves (9, 10) are both or together pilot controlled by an electrically controlled pilot valve (7).

3. Control device according to claim 1 or 2, **characterised by** the throttle valve (12) and the supply valve (9) being components of a circuit.

4. Control device according to claim 1 or 2, **characterised by** the throttle valve (12) and the supply valve (9) being components of a plurality of circuits.

5. Control device according to one or a plurality of claims 1 to 4, **characterised by** the throttle valve (12) comprising a throttle (26) being effective in or integrated into the opened state.

6. Control device according to one of claims 1 to 5, **characterised by** a common supply valve (9) for a plurality of circuits being provided which is switchable by an electrical pilot valve (6).

7. Control device according to one of claims 1 to 6, **characterised by** an electrical pilot valve (6) being associated with a plurality of supply valves (9, 39) of a plurality of circuits such that the supply valves (9, 39) are both or together switchable by the electrical pilot valve (6).

8. Control device according to one of claims 1 to 7, **characterised by** the throttle valve (12) comprising a spring (25) acting into the open state.

9. Control device according to one of claims 1 to 7, **characterised by** the throttle valve (12) comprising a spring (25) acting into the blocked state.

10. Control device of at least one of claims 1 to 9, **characterised by** the electrical pilot valve (6) being associated with a plurality of supply valves (9, 39) of a plurality of circuits and with a throttle valve (12) such that the supply valves (9, 39) and the throttle valve (12) are together or both switchable by the electrical pilot valve (6).

## Revendications

1. Dispositif de commande pour un système de suspension pneumatique d'un véhicule automobile, avec des coussins d'air pneumatiques (3, 4) associés aux deux côtés véhicule d'un essieu, lesquels sont reliés par une vanne d'étranglement transversale (12) pneumatique apte à être pilotée électriquement, agencée dans une conduite transversale (24) entre les coussins d'air pneumatiques (3, 4), comportant une unité de commande (8) électrique, en particulier intégrée, comportant plusieurs vannes pilotes (6, 7) aptes à être commandées électriquement, actionnées par l'unité de commande (8) et associées à des essieux, dont l'une pilote une vanne d'alimentation pneumatique, **caractérisé en ce que** la vanne d'étranglement transversale (12) pneumatique, apte à être pilotée électriquement, sépare les coussins d'air pneumatiques (3, 4) l'un de l'autre dans une position de fermeture et les relie l'un à l'autre dans une position de passage, et **en ce que** la vanne d'étranglement transversale (12) et la vanne d'alimentation (9 ou 39) associée à un essieu ou les vannes d'alimentation (9, 39) associées à plusieurs essieux peuvent être actionnées conjointement par l'intermédiaire de la vanne pilote (6) électrique.

2. Dispositif de commande selon la revendication 1, **caractérisé en ce qu'**à l'essieu, dont les coussins d'air pneumatiques (3, 4) sont reliés entre eux par l'intermédiaire de la vanne d'étranglement transversale (12), sont associées des vannes d'arrêt (9, 10), qui sont pilotées conjointement par une vanne pilote (7) apte à être commandée électriquement.

3. Dispositif de commande selon la revendication 1 ou 2, **caractérisé en ce que** la vanne d'étranglement transversale (12) et la vanne d'alimentation (9) sont des composants d'un circuit.

4. Dispositif de commande selon la revendication 1 ou 2, **caractérisé en ce que** la vanne d'étranglement transversale (12) et la vanne d'alimentation (9) sont des composants de plusieurs circuits.

5. Dispositif de commande selon une ou plusieurs des revendications 1 à 4, **caractérisé en ce que** la vanne d'étranglement transversale (12) comporte un étranglement (26) intégré dans la position de passage.

6. Dispositif de commande selon au moins l'une des revendications 1 à 5, **caractérisé en ce qu'**il est prévu une vanne d'alimentation (9) commune pour plusieurs circuits, laquelle peut être actionnée par une vanne pilote (6) électrique.

7. Dispositif de commande selon au moins l'une des revendications 1 à 6, **caractérisé en ce qu'**une vanne pilote (6) électrique est associée à plusieurs vannes d'alimentation (9, 39) de plusieurs circuits, de telle sorte que les vannes d'alimentation (9, 39) peuvent être actionnées conjointement par l'intermédiaire de la vanne pilote (6) électrique.

8. Dispositif de commande selon au moins l'une des revendications 1 à 7, **caractérisé en ce que** la vanne d'étranglement transversale (12) comporte un ressort (25), qui sollicite la position de passage.

9. Dispositif de commande selon au moins l'une des revendications 1 à 7, **caractérisé en ce que** la vanne d'étranglement transversale (12) comporte un ressort (25), qui sollicite la position de fermeture.

10. Dispositif de commande selon au moins l'une des revendications 1 à 9, **caractérisé en ce qu'**une vanne pilote (6) électrique est associée à plusieurs vannes d'alimentation (9, 39) de plusieurs circuits et à une vanne d'étranglement transversale (12), de telle sorte que les vannes d'alimentation (9, 39) et la vanne d'étranglement transversale (12) peuvent être actionnées conjointement par l'intermédiaire de la vanne pilote (6) électrique.
